# EUROPÄISCHE PATENTSCHRIFT

(11) **EP 0 572 781 B1**
(45) Veröffentlichungstag und Bekanntmachung des Hinweises auf die Patenterteilung: **11.09.1996**
(21) Anmeldenummer: 93105810.1
(22) Anmeldetag: 08.04.1993
(51) Int. Cl.: C04B 11/032, C04B 11/26

(54) **Verfahren zur Herstellung von ALPHA-Halbhydrat aus Calciumsulfat-Dihydrat in einem Reaktor**
Process for the preparation of alpha-hemihydrate from calcium sulphate dihydrate in a reactor
Procédé pour la préparation de hémihydrate du type alpha à partir de sulfate de calcium dihydraté dans un réacteur

(30) Priorität: 30.05.1992 DE 4217978
(43) Veröffentlichungstag der Anmeldung: 08.12.1993
(73) Patentinhaber: Heidelberger Zement AG, D-69120 Heidelberg (DE)
(72) Erfinder: Will, Oskar, W-6906 Leimen (DE); Schalkhaüser, Ulrich H., W-6900 Heidelberg (DE)
(74) Vertreter: Schmid, Rudolf, Dipl.-Ing. Patentanwalt

(56) Entgegenhaltungen:
- AT-A- 271 303
- DE-A- 3 631 883
- DE-A- 3 711 367
- DE-A- 3 738 301

## Beschreibung

Die Erfindung betrifft ein Verfahren zur Herstellung von alpha-Calciumsulfat-Halbhydrat aus Calciumsulfat-Dihydrat nach dem Trockenverfahren, bei dem feinkörniges Rohgut aufgegeben und unter der Einwirkung von Druck, Temperatur und Wasserdampf umgewandelt, das Gut in einem ruhenden Reaktor mit von außen angetriebenen Mischeinrichtungen oder in einem sich drehenden Reaktor mit feststehenden oder beweglichen Mischeinrichtungen im Inneren gemischt, die Temperatur des Gutes im Reaktor fortlaufend gemessen und nach einem vorgewählten zeitlichen Verlauf geregelt wird.

Nach dem Stand der Technik unterscheidet man Trocken- und Naß-Verfahren.

Naßverfahren arbeiten mit feinkörnigem Rohgut, das mit Wasser eines bestimmten pH-Wertes vermischt einem Reaktor aufgegeben wird. Am Ende des Verfahrens müssen Wasser und Fertiggut wieder getrennt werden. Diese Verfahren erfordern einen hohen technischen Aufwand. Restsstoffe müssen entsorgt werden und dem Fertiggut können unerwünschte Verfärbungen oder Gerüche anhaften.

Bei den Trockenverfahren wird in den meisten Anwendungen Naturgips in stückiger Form einem Autoklaven aufgegeben. Das Erhitzen erfolgt durch gespannten Wasserdampf, der in die Hohlräume der Schüttung eindrigen kann. Eine Erfassung der Temperatur im Inneren der Schüttung ist nicht möglich, was dazu führt, daß dieser Vorgang langsam erfolgen und die Umwandlungstemperatur lange gehalten werden muß, damit eine gleichmäßige Qualität sichergestellt ist. Feinkörnige Anteile in der Schüttung führen zu Nesterbildung, die sich negativ auswirkt. Das entstehende ALPHA-Halbhydrat muß anschließend noch getrocknet und gemahlen werden. Dies geschieht vielfach in zwei Schritten mit einer Zwischenzerkleinerung, um auch hier eine gleichmäßige Qualität zu erlangen.

In dem Trockenverfahren nach der DE 37 11 367 C2 zur Umwandlung eines feinteiligen industriellen Abfallstoffes auf der Basis von Calciumsulfat-Dihydrat in Calciumsulfat-Halbhydrat wird das entscheidende Problem bei der Dehydratation angesprochen, nämlich die gleichmäßige Erwärmung der Feststoffteilchen. Eine ungleichmäßige Erwärmung führt zu schwankenden Dehydratationsgraden und damit zu unterschiedlichen Qualitäten des Endprodukts. Bei diesem bekannten Verfahren ist es erforderlich, daß das feinkörnige Rohgut für das eigentliche Dehydratationsverfahren vorbehandelt, nämlich entlüftet wird, damit der nachfolgend eingeleitete gespannte Wasserdampf in das Innnere der ruhenden Feststoffschüttung eindringen kann, um diese bis in den Kern hinein aufzuheizen. Ziel dieser Konditionierung ist es, den Wärmeübergang zwischen den einzelnen Rohstoffteilchen bei der Dehydratationsbehandlung zu verbessern und damit Unregelmäßigkeiten der Temperaturverteilung, dadurch bedingte schwankende Dehydratationsgrade und infolgedessen schwankende Qualitäten des Endprodukts zumindest zu verringern. Das Rohgut wird chargenweise, in Körben abgefüllt, in den Autoklaven eingesetzt, und das Problem der Temperaturverteilung ist umso kritischer , je größer die Abmessungen dieser Körbe sind. Eine Bewegung des Guts ist hier nicht vorgesehen, ebensowenig eine fortlaufende Erfassung der Temperatur im Inneren der Schüttung und noch viel weniger eine Kontrolle und Regelung des Umwandlungsvorgangs. Mit diesem bekannten Verfahren gehen außerdem die Nachteile einher, daß das Rohgut während der gesamten Autoklavbehandlung ortsfest, gehalten ist, und daß die Endtrocknung immer in einem separaten Trockner stattfindet, wodurch Zwischenlagerstätten (Autoklav oder Silo) erforderlich sind.

Aus der DE 37 38 301 A1 ist es bekannt, Rohgips vor dem Calcinierungsvorgang durch Zufuhr von gasförmigem Fluidisierungsmedium in einen flüssigkeitsähnlichen Zustand zu bringen. Über das Fluidisierungsmedium (Wärmeträgergas) wird auch die für die Dehydratation erforderliche Wärme zugeführt. Es darf nur solches Rohgut zugeführt werden, daß so trocken ist, daß es einer Fluidisierung zugänglich ist. Die DE 37 38 301 A1 enthält jedoch keinerlei Hinweis darauf, das Rohgut während der Umwandlung zu mischen und dabei seine Temperatur fortlaufend zu messen.

Aus der DE 36 31 883 ist ein Verfahren bekannt, bei dem die Temperatur des Wasserdampfes, der bei der Umwandlungsreaktion frei wird, gemessen und geregelt wird. Damit kann jedoch allenfalls die Umgebungstemperatur des Schüttguts überwacht und beeinflußt werden. Das Problem der gleichmäßigen Durchwärmung des Schüttgut unter fortlaufender Kontrolle wird in der D3) weder angesprochen noch gelöst.

Das erfindungsgemäße Verfahren ist den Trockenverfahren zuzuordnen. Es wird feinkörniges Rohgut eingesetzt. Feinkörniges Rohgut einzusetzen ist vorteilhaft, da die Feststoffpartikel bis in den Kern sicher erwärmt werden können. Dies kürzt den Verfahrensablauf ab und führt zu einer gleichmäßigen Qualität. Darüber hinaus wird ALPHA-Halbhydrat in der Regel in feinkörniger Form verarbeitet, d.h. eine dem Verfahren nachgeschaltete Zerkleinerung kann in bestimmten Anwendungsfällen entfallen. Feinkörniges Rohgut kann aus natürlichen Rohstoffen einfach hergestellt werden, bzw. fällt in chemischen Prozessen und Rauchgas-Entschwefelungsanlagen bereits in dieser Form an.

Das erfindungsgemäße Verfahren hat die Vorteile, daß das Rohgut während der gesamten Dehydratationsbehandlung gemischt wird, wodurch sich die jeweils angelegte Temperatur sehr viel schneller und mit größtmöglicher Gleichmäßigkeit zwischen den einzelnen Rohgutteilchen verteilt. Im Unterschied zu ungemischtem Gut ist hier gewährleistet, daß auch die sich ursprünglich in der Mitte der Schüttung befindlichen Teilchen sehr schnell von der Behandlungstemperatur erfaßt werden und nicht erst nach Ablauf der Zeitspanne, die die Wärme braucht, um durch die Dicke des ursprünglichen Schüttguthaufens bis zu dessen Mitte hin zu dringen. Die Erwärmung der Gipsteilchen wird erfindungsgemäß ständig registriert und die einwirkende Temperatur gegebenenfalls nachreguliert, so daß die vorgegebene Reaktionstemperatur sehr schnell erreicht wird und im wesentlichen während der gesamten Reaktionszeit erhalten bleibt. Es kann sowohl trockenes als auch feuchtes Aufgabegut eingesetzt werden.

Mit der erfindungsgemäßen Maßnahmenkombination wird erreicht, daß erstens die eigenspezifischen Vorteile der einzelnen Mittel zum Tragen kommen, nämlich die gleichmäßige Warmeausbreitung innerhalb der Einzelteilchen des Rohgutes und die Überprüfung und nachregelbare Einstellung der Reaktionstemperatur, und zweitens der vorteilhafte Effekt erzielt wird, daß ein Temperaturabfall zu Beginn des Verfahrens, bedingt durch das Mischen, sofort erkannt und schnellstmöglich kompensiert werden kann. Dadurch ist das Verfahren hinsichtlich Zeit- und Energieverbrauch gegenüber dem Stand der Technik wesentlich optimiert.

Die wirtschaftlichen Vorteile des erfindungsgemäßen Verfahrens liegt in einer um 40% höheren Ausbeute des Rohgipses, einem um 54% geringeren Wärmeverbrauch, und einem um 69 % geringeren Elektroenergieverbrauch-jeweils verglichen mit dem Stand der Technik, außerdem in der vollständigen Vermeidung von Abfall und damit Entsorgungsaufwand, und in der guten guten Reproduzierbarkeit der Chargenqualität. Darüberhinaus kann das Verfahren mit an sich bekannten Anlagen, die ohne großen technischen Aufwand entsprechend modifiziert sind, durchgeführt werden, wobei alle Verfahrensschritt, selbst die Endtrocknung des Reaktionsprodukts, in einem einzigen Reaktor ablaufen können.

Nach dem erfindungsgemäßen Verfahren wird eine gleichmäßige Erwärmung des feinkörnigen Rohgutes in dem Reaktor sichergestellt, indem die Feststoffschüttung fortwährend durch entsprechende Einrichtungen gemischt wird. Temperaturfühler ergeben einen repräsentativen Meßwert für die Temperatur der Schüttung.

Nach dem erfindungsgemäßen Verfahren kann dem Rohgut die erforderliche Wärme sowohl indirekt über die Reaktorwand und/oder Einbauten, als auch direkt über Heißgas oder Heißdampf zugeführt werden. Das indirekte Aufheizen ermöglicht den Einsatz von Wärmeträger-Öl. Die gleichmäßige Temperaturverteilung im Gut ermöglicht eine exakte Temperatur-Erfassung und -Regelung, wodurch das erfindungsgemäße Verfahren besonders energiesparend wird und ALPHA-Halbhydrat einer gleichmäßigen Qualität erzeugt.

Das Rohgut kann in dem erfindungsgemäßen Verfahren in weiten Grenzen unabhängig von der Oberflächenfeuchte und dem Gehalt an Kristallwasser verarbeitet werden.

Neben der Temperatur ist der Druck im Reaktor entscheidendes Kriterium für den Umwandlungsvorgang. Nach dem erfindungsgemäßen Verfahren ist es möglich, den Reaktor nach dem Einfüllen des Rohgutes sofort mit Luftdruck zu beaufschlagen. Bei Erwärmung setzt sich das dem Rohgut anhaftende Wasser in Dampf um und bewirkt den für die Umwandlung vorteilhaften Wasserdampfpartialdruck ohne bzw. mit geringen Zugaben von Wasser oder Wasserdampf.

Additive können den Umwandlungsvorgang vorteilhaft beeinflussen. Nach dem erfindungsgemäßen Verfahren können diese während des Verfahrensablaufes in den Reaktor gegeben werden.

Sie werden durch die Mischbewegung in der Schüttung gleichmäßig verteilt. Es ist nicht wie bei dem Verfahren gemäß DE-OS 37 11 367 erforderlich, Additive dem Rohgut in einem gesonderten Verfahrensschritt vor dem Einfüllen in den Reaktor beizumischen.

Während der Umwandlung des Kristallgefüges kommt es zu plastischen Veränderungen der Festkörper. Dies kann zu Agglomerierungen führen, die jedoch erfindungsgemäß durch entsprechend gestaltete Mischwerkzeuge oder Einbauten vermieden oder wieder aufgelöst werden.

Nachdem die Umwandlung des Rohgutes in das ALPHA-Halbhydrat abgeschlossen ist, erfolgt das Trocknen; nach dem erfindungsgemäßen Verfahren findet die Trocknung gegebenenfalls vorzugsweise in dem gleichen Reaktor ebenfalls unter ständiger Durchmischung der Schüttung statt. Durch eine Druckabsenkung kann zunächst Wasserdampf abgelassen werden. Ein Unterdruck im Reaktor beschleunigt den Trocknungsvorgang. Brüden können zur Wärmerückgewinnung mit Hilfe eines Wärmetauschers kondensiert und abgeführt werden. Das Trocknen kann jedoch auch durch Spülen des Reaktors mit erhitzter Luft erfolgen. Die ständige Durchmischung der Schüttung verhindert Überbrennungen.

Sowohl bei dem diskontinuierlichen als auch beim kontinuierlichen Verfahren kann es vorteilhaft sein, den gesamten Trocknungsvorgang oder die Resttrocknung in einer separaten, nachgeschalteten Trocknungseinrichtung durchzuführen, beispielsweise um die Durchsatzleistung zu steigern.

Der Mischvorgang des Gutes im Reaktor kann durch unterschiedliche Ausführungsformen des Reaktors bewirkt werden.
Ein ruhender Reaktor mit von außen angetriebenen Mischeinrichtungen erlaubt es, hohe mechanische Kräfte im Gut wirksam werden zu lassen. Dies kann bei stark agglomerierendem Gut vorteilhaft sein und führt zu guten Mischleistungen. Ein sich drehender Reaktor mit feststehenden oder beweglichen Mischeinrichtungen im Inneren kann zu einer kostengünstigen Konstruktion führen, wobei jedoch nur vergleichsweise geringe Kräfte auf das Gut einwirken.

Wie auch bei anderen Anwendungen von Reaktoren sind für das Herstellen von ALPHA-Halbhydrat sowohl diskontinuierlich als auch kontinuierlich arbeitende Reaktoren einsetzbar.

Das erfindungsgemäße Verfahren erlaubt es, alle zur Herstellung von gebrauchsfertigen ALPHA-Halbhydrat erforderlichen verfahrenstechnischen Schritten vorzugsweise in einem einzigen Reaktor durchzuführen. Die Trocknung kann jedoch auch wahlweise in einer separaten, nachgeschalteten Einrichtung erfolgen. Die besonderen Vorteile liegen in der Verarbeitung von feinkörnigen Rohgut, einem gut steuerbaren Verfahrensablauf und einer kompakten kostengünstigen Anlage mit geringem Energiebedarf. Abgesehen von dem Wasser, das dem Reaktor beim Trocknen des Fertiggutes entzogen werden muß, fallen keine Reststoffe an, die entsorgt werden müßten.

## Patentansprüche

1. Verfahren zur Herstellung von alpha-Calciumsulfat-Halbhydrat aus Calciumsulfat-Dihydrat nach dem Trockenverfahren, bei dem feinkörniges Rohgut aufgegeben und unter der Einwirkung von Druck, Temperatur und Wasserdampf umgewandelt wird, dadurch gekennzeichnet,
daß das Gut in einem ruhenden Reaktor mit von außen angetriebenen Mischeinrichtungen oder in einem sich drehenden Reaktor mit feststehenden oder beweglichen Mischeinrichtungen im Inneren gemischt wird, und
daß die Temperatur des Gutes im Reaktor fortlaufend gemessen und nach einem vorgewählten zeitlichen Verlauf geregelt wird.

2. Verfahren nach Anspruch 1, dadurch gekennzeichnet, daß als Rohgut feinkörniger Naturgips eingesetzt wird.

3. Verfahren nach Anspruch 1, dadurch gekennzeichnet, daß als Rohgut feinkörniges Calciumsulfat-Dihydrat aus Rauchgas-Entschwefelungsanlagen eingesetzt wird.

4. Verfahren nach Anspruch 1, dadurch gekennzeichnet, daß als Rohgut auf chemischem Wege erzeugtes, feinkörniges Calciumsulfat-Dihydrat eingesetzt wird.

5. Verfahren nach Anspruch 1 bis 4, dadurch gekennzeichnet, daß das Rohgut mit einem bestimmten Anteil an Oberflächenfeuchte aufgegeben wird.

6. Verfahren nach Anspruch 1 bis 4, dadurch gekennzeichnet, daß das Rohgut trocken, d.h. ohne Oberflächenfeuchte und/oder mit einem reduzierten Anteil an Kristallwasser aufgegeben wird.

7. Verfahren nach Anspruch 1 bis 6, dadurch gekennzeichnet, daß dem Gut im Reaktor Additive beigegeben und vermischt werden.

8. Verfahren nach Anspruch 1 bis 7 dadurch gekennzeichnet, daß das Gut im Reaktor durch direkte und/oder indirekte Wärmezuführ erhitzt wird.

9. Verfahren nach Anspruch 1 bis 8, dadurch gekennzeichnet, daß der Druck im Reaktor fortlaufend gemessen und nach einem vorgewählten zeitlichen Verlauf geregelt wird.

10. Verfahren nach Anspruch 1 bis 9, dadurch gekennzeichnet, daß im Reaktor ein Wasserdampfdruck kontrolliert aufgebaut und nach einem vorgewählten zeitlichen Verlauf geregelt wird.

11. Verfahren nach Anspruch 1 bis 9, dadurch gekennzeichnet, daß dem Reaktor durch eine Kondensationseinrichtung Wasserdampf entzogen wird.

12. Verfahren nach Anspruch 1 bis 9, dadurch gekennzeichnet, daß der Reaktor während des Verfahrensablaufs mit Luft beaufschlagt und/oder durchspült wird.

13. Verfahren nach Anspruch 1 bis 12, dadurch gekennzeichnet, daß der Reaktor diskontinuierlich betrieben wird.

14. Verfahren nach Anspruch 1 bis 12, dadurch gekennzeichnet, daß der Reaktor kontinuierlich betrieben wird.

15. Verfahren nach Anspruch 1 bis 12, dadurch gekennzeichnet, daß das Verfahren diskontinuierlich oder kontinuierlich in einem Umwandlungsreaktor mit einer separaten, nachgeschalteten Trocknungseinrichtung betrieben wird.

## Claims

1. A method of preparing alpha calcium hemihydrate from calcium sulphate dihydrate using a dry process, in which fine-grained raw material is introduced and is converted under the action of pressure, temperature and steam, characterised in that the material is mixed in a stationary reactor with externally driven mixing means or in a rotating reactor with stationary or movable mixing means in the interior, and in that the temperature of the material in the reactor is measured continuously and is regulated after a preset period of time.

2. A method according to Claim 1, characterised in that fine-grained natural gypsum is used as the raw material.

3. A method according to Claim 1, characterised in that fine-grained calcium sulphate dihydrate from flue gas desulphurisation installations is used as the raw material.

4. A method according to Claim 1, characterised in that fine-grained calcium sulphate dihydrate, produced by chemical means, is used as the raw material.

5. A method according to any one of Claims 1 to 4, characterised in that the raw material is introduced with a given proportion of surface moisture.

6. A method according to any one of Claims 1 to 4, characterised in that the raw material is introduced dry, i.e. without surface moisture and/or with a reduced proportion of water of crystallisation.

7. A method according to any one of Claims 1 to 6, characterised in that additives are added to and mixed with the material in the reactor.

8. A method according to any one of Claims 1 to 7, characterised in that the material is heated in the reactor by direct and/or indirect heat input.

9. A method according to any one of Claims 1 to 8, characterised in that the pressure in the reactor is measured continuously and is regulated after a preset period of time.

10. A method according to any one of Claims 1 to 9, characterised in that a steam pressure is built up in a controlled manner in the reactor and is regulated after a preset period of time.

11. A method according to any one of Claims 1 to 9, characterised in that steam is removed from the reactor by a condensation means.

12. A method according to any one of Claims 1 to 9, characterised in that during the course of the process air is admitted to the reactor an/or is flushed therethrough.

13. A method according to any one of Claims 1 to 12, characterised in that the reactor is operated discontinuously.

14. A method according to any one of Claims 1 to 12, characterised in that the reactor is operated continuously.

15. A method according to any one of Claims 1 to 12, characterised in that the method is operated discontinuously or continuously in a conversion reactor with a separate drying means connected downstream thereof.

## Revendications

1. Procédé de préparation de sulfate de calcium α semi-hydraté à partir de sulfate de calcium dihydraté, d'après le procédé de séchage, dans lequel le produit brut à grains fins est chargé et transformé sous l'effet de la pression, de la température et de vapeur d'eau, caractérisé en ce que le matériau est mélangé dans un réacteur statique équipé de dispositifs mélangeurs actionnés de l'extérieur ou dans un réacteur rotatif avec des dispositifs mélangeurs fixes ou mobiles à l'intérieur, et que la température du matériau dans le réacteur est mesurée en continu et réglée après qu'un laps de temps présélectionné s'est écoulé.

2. Procédé selon la revendication 1, caractérisé en ce qu'on utilise du gypse naturel à grains fins comme matériau brut.

3. Procédé selon la revendication 1, caractérisé en ce qu'on utilise, comme matériau brut, du sulfate de calcium dihydraté à grains fins provenant d'installations de désulfuration des gaz de fumée.

4. Procédé selon la revendication 1, caractérisé en ce qu'on utilise, comme matériau brut, du sulfate de calcium dihydraté à grains fins produit par voie chimique.

5. Procédé selon l'une des revendications 1 à 4, caractérisé en ce que le matériau brut est chargé avec un taux défini d'humidité superficielle.

6. Procédé selon l'une des revendications 1 à 4, caractérisé en ce que le matériau brut est chargé à l'état sec, c'est-à-dire sans humidité superficielle, et/ou avec un taux réduit d'eau cristalline.

7. Procédé selon l'une des revendications 1 à 6, caractérisé en ce que des additifs sont ajoutés au matériau dans le réacteur et mélangés avec celui-ci.

8. Procédé selon l'une des revendications 1 à 7, caractérisé en ce que le matériau est chauffé dans le réacteur grâce à un apport de chaleur direct et/ou indirect.

9. Procédé selon l'une des revendications 1 à 8, caractérisé en ce que la pression dans le réacteur est mesurée en continu et régulée après qu'un laps de temps prédéterminé s'est écoulé.

10. Procédé selon l'une des revendications 1 à 9, caractérisé en ce qu'une pression de vapeur d'eau s'établit de façon contrôlée dans le réacteur et est régulée après qu'un laps de temps prédéterminé s'est écoulé.

11. Procédé selon l'une des revendications 1 à 9, caractérisé en ce que de la vapeur d'eau est soutirée du réacteur au moyen d'un dispositif de condensation.

12. Procédé selon l'une des revendications 1 à 9, caractérisé en ce que le réacteur est chargé et/ou rincé avec de l'air pendant le déroulement du procédé.

13. Procédé selon l'une des revendications 1 à 12, caractérisé en ce que le réacteur est actionné de façon discontinue.

14. Procédé selon l'une des revendications 1 à 12, caractérisé en ce que le réacteur est actionné en continu.

15. Procédé selon l'une des revendications 1 à 12, caractérisé en ce qu'on le met en oeuvre de façon discontinue ou en continu dans un réacteur de transformation comportant un dispositif de séchage séparé situé en aval.
